Europäisches Patentamt

European Patent Office

Office européen des brevets

(19)

(11) Numéro de publication : **0 394 107 B1**

(12)                    **FASCICULE DE BREVET EUROPEEN**

(45) Date de publication du fascicule du brevet :
16.03.94 Bulletin 94/11

(51) Int. Cl.⁵ : **C04B 35/30**

(21) Numéro de dépôt : **90401010.5**

(22) Date de dépôt : **12.04.90**

(54) **Composition céramique diélectrique à base de ferrite et son procédé de fabrication.**

(30) Priorité : **17.04.89 FR 8905054**

(43) Date de publication de la demande :
**24.10.90 Bulletin 90/43**

(45) Mention de la délivrance du brevet :
**16.03.94 Bulletin 94/11**

(84) Etats contractants désignés :
**DE GB NL**

(56) Documents cités :
**EP-A- 0 040 881**
**EP-A- 0 270 098**
**EP-A- 0 270 099**
**GB-A- 2 026 466**
**US-A- 3 075 920**

(73) Titulaire : **COMMISSARIAT A L'ENERGIE
ATOMIQUE
31/33, rue de la Fédération
F-75015 Paris Cédex 15 (FR)**

(72) Inventeur : **Bonnet, Jean-Pierre
Rue Daureau
F-33360 Carignan de Bordeaux (FR)**
Inventeur : **Deleuze, Christian
1 rue de la Pinsonnière
F-37260 Monts (FR)**
Inventeur : **Denage, Catherine
91 rue de Chartreze
33170 Gradignan (FR)**
Inventeur : **Largeteau, Alain
22 rue Joriis
F-33400 Talence (FR)**
Inventeur : **Miane, Jean-Louis
c/o C.E.A. - C.E.S.T.A., B.P. N 2
F-33114 LE BARP (FR)**
Inventeur : **Ravez, Jean
9 Allée de Perliguey
F-33850 Leognan (FR)**
Inventeur : **Simon, Annie
90 rue Robespierre
F-33400 Talence (FR)**

(74) Mandataire : **Mongrédien, André et al
c/o BREVATOME 25, rue de Ponthieu
F-75008 Paris (FR)**

**Description**

La présente invention a pour objet une composition céramique diélectrique à base de ferrite et son procédé de fabrication.

De façon plus précise, elle concerne des céramiques magnétodiélectriques à base de ferrite Ni-Zn ayant des propriétés diélectriques particulières qui peuvent être ajustées aisément en fonction de l'utilisation envisagée.

Ces céramiques magnétodiélectriques peuvent être utilisées comme revêtement absorbant les hyperfréquences ou dans des composants électroniques, pour toutes les applications classiques des matériaux ferrites dans lesquelles il est intéressant de pouvoir moduler les caractéristiques diélectriques sans modifier les propriétés magnétiques.

Les ferrites sont des composés magnétiques conducteurs de l'électricité ou isolants qui peuvent être classés en quatre familles :

- $MFe_2O_4$ de structure type spinelle,
- $M_{0,6}Fe_2O_3$ de structure magnétoplombite,
- $MFeO_3$ du type orthoferrite, et
- $M_3Fe_5O_{12}$ de structure type grenat,
  dans lesquelles M représente un cation bivalent tel que Fe, Ni, Co, Zn, Cd.

La présente invention concerne plus particulièrement les ferrites appartenant à la première famille de structure spinelle de formule $MFe_2O_4$.

Ces ferrites sont généralement utilisés en électronique dans le domaine des basses fréquences et des hyperfréquences. Ils sont formés de grains isolants ou conducteurs, mais peuvent être aussi obtenus par synthèse directe sous la forme d'isolants par formation lors du refroidissement d'une couche isolante à la surface des grains conducteurs. Cependant, dans ce cas il n'est pas possible de moduler les propriétés diélectriques du ferrite car on l'obtient à l'état complètement isolant.

La présente invention concerne des compositions céramiques à base de ferrites conducteurs dont les propriétés diélectriques sont adaptées, en fonction de l'utilisation envisagée, par réalisation d'une couche d'arrêt intergranulaire ; ceci permet de moduler la conductivité du ferrite entre l'état conducteur et l'état isolant sans changer notablement ses propriétés magnétiques.

Selon l'invention, la composition céramique diélectrique comporte des grains semiconducteurs de ferrite, isolés par une substance formant couche d'arrêt intergranulaire constituée de $Bi_2O_3$ et d'au moins un oxyde choisi parmi $Li_2O$, PbO, $SiO_2$, $B_2O_3$, $Fe_2O_3$, $Na_2O$ et $K_2O$.

En réalité, les oxydes $Li_2O$, $Na_2O$ et $K_2O$ qui interviennent dans le mélange de la couche d'arrêt proviennent des carbonates $Li_2CO_3$, $Na_2CO_3$ et $K_2CO_3$ utilisés dans les mélanges initiaux et qui se décomposent à haute température en donnant naissance aux oxydes après départ de $CO_2$.

Bien que dans l'invention on puisse utiliser uniquement deux oxydes dont l'oxyde de bismuth pour former cette couche d'arrêt intergranulaire, on préfère généralement utiliser 3 oxydes ou davantage car ceci permet une réalisation plus facile de la céramique ainsi qu'une modulation plus aisée de ses propriétés.

Aussi, de préférence, la couche d'arrêt intergranulaire est constituée de $Bi_2O_3$, $Li_2O$ et d'au moins un oxyde choisi parmi PbO, $SiO_2$, $B_2O_3$, $Fe_2O_3$, $Na_2O$ et $K_2O$.

Généralement, la substance formant couche d'arrêt représente 0,45 à 15% en poids du ferrite.

La présence de cette substance formant couche d'arrêt intergranulaire et le choix de la quantité utilisée permettent de moduler les propriétés isolantes de la composition céramique, dans des rapports allant de 1 à 100, dans le domaine des basses fréquences et, dans des rapports allant de 1 à 10, dans le domaine des hyperfréquences.

Ainsi, en fonction des utilisations envisagées, c'est-à-dire des fréquences d'absorption souhaitées, il sera possible de maîtriser les propriétés de la céramique diélectrique en jouant sur les permittivités $\varepsilon_r$ et les perméabilités $\mu_r$. Ces valeurs seront réglées en choisissant judicieusement la nature et la quantité de substance formant couche d'arrêt ainsi que les conditions de fabrication de la composition céramique.

De préférence, le ferrite utilisé appartient à la famille $MFe_2O_4$ avec M représentant Ni et Zn.

A titre d'exemples de ferrites de ce type, on peut citer celui répondant à la formule $Ni_xZn_{1-x}Fe_2O_4$ dans laquelle x est tel que $0,40 \leq x \leq 0,60$, par exemple le ferrite de formule $Ni_{0,5}Zn_{0,5}Fe_2O_4$.

Selon une autre caractéristique de l'invention, la substance formant couche d'arrêt est formée d'un mélange de a $Bi_2O_3$, b $Li_2O$ et c Z avec Z représentant PbO, $SiO_2$, $B_2O_3$, $Fe_2O_3$, $Na_2O$ ou $K_2O$, et a, b et c représentant les fractions molaires des constituants du mélange et étant tels que

- a+b>0,50, et
- a+b+c=1.

Le choix de l'oxyde Z influe en particulier sur le caractère isolant de la composition céramique et l'on obtient

2

la composition la plus isolante lorsque Z représente $Fe_2O_3$.

Les fractions molaires des différents constituants du mélange formant la couche d'arrêt ont également une influence sur les propriétés obtenues. Pour obtenir les compositions les plus isolantes, on utilise de préférence des fractions molaires a et b égales toutes deux à 0,45 et une fraction molaire c égale à 0,10.

L'invention a également pour objet un procédé de préparation d'une composition céramique diélectrique telle que définie ci-dessus, qui consiste à préparer par frittage un ferrite semiconducteur, et à imprégner le ferrite ainsi obtenu par un mélange fondu comprenant $Bi_2O_3$ et au moins un autre constituant choisi parmi $Li_2O$, PbO, $SiO_2$, $B_2O_3$, $Fe_2O_3$, $Na_2O$ et $K_2O$.

De préférence, le mélange fondu est un mélange ternaire comprenant a $Bi_2O_3$, b $Li_2O$ et c Z' avec Z' représentant PbO, $SiO_2$, $B_2O_3$, $Fe_2O_3$, $Na_2O$ ou $K_2O$ et a, b et c, représentant les fractions molaires des constituants du mélange ternaire et étant tels que

- a+b>0,50, et
- a+b+c=1.

L'imprégnation du ferrite peut être réalisée en particulier en effectuant les étapes suivantes :

1°) préparation d'une suspension du mélange de $Bi_2O_3$ et du ou des autres constituants et/ou de précurseurs de ce ou ces autres constituants dans un liquide volatil,

2°) dépôt du mélange sur le ferrite par application de la suspension suivie d'un séchage pour évaporer le solvant,

3°) chauffage du ferrite revêtu du mélange à une température d'imprégnation $T_i$ telle que le mélange soit fondu, et

4°) maintien du ferrite à cette température pendant une durée $D_i$ suffisante pour former la couche d'arrêt intergranulaire.

Le liquide volatil utilisé pour la préparation de la suspension est généralement un liquide organique, par exemple de l'alcool polyvinylique.

Les précurseurs utilisés pour la préparation de la suspension sont en particulier les carbonates de lithium, de sodium et de potassium qui sont transformés en oxydes pendant l'imprégnation.

La concentration en mélange ternaire de la suspension est élevée afin que la suspension ait une viscosité appropriée pour pouvoir être appliquée facilement sur le ferrite, par exemple au moyen d'un pinceau.

Le séchage est ensuite réalisé à chaud, par exemple à des températures de 100 à 300°C, pour accélérer l'évaporation du liquide volatil.

Après séchage, on porte l'ensemble à la température d'imprégnation $T_i$ voulue.

Dans ce procédé, le choix de la quantité de mélange utilisé, de la température $T_i$ et de la durée $D_i$ d'imprégnation permet de régler les caractéristiques physiques de la composition céramique obtenue sans modifier pour autant les microstructures qui restent reproductibles et contrôlées.

Ces caractéristiques physiques sont en particulier les constantes diélectriques et les perméabilités magnétiques. Les constantes diélectriques relatives réelle $\varepsilon'_r$, et imaginaire $\varepsilon''_r$ ainsi que les perméabilités réelle $\mu'_r$ et imaginaire $\mu''_r$ varient avec la quantité de mélange utilisée, la nature des constituants du mélange ainsi que les températures et durées d'imprégnation. Généralement, on utilise une quantité de mélange représentant de 0,45 à 15% en poids du ferrite.

Lorsqu'on fait varier cette quantité de mélange de 0,45 à 2% en poids du ferrite, les valeurs de $\varepsilon'_r$, $\varepsilon''_r$, $\mu'_r$ et $\mu''_r$ varient de façon très importante, soit de l'ordre de 10. Lorsqu'on utilise une quantité de mélange supérieure à 2% en poids du ferrite, ce qui correspond à la meilleure isolation, les variations de $\varepsilon'_r$, $\varepsilon''_r$, $\mu'_r$ et $\mu''_r$ deviennent faibles.

La température d'imprégnation $T_i$ est choisie de façon à obtenir la fusion du mélange et une diffusion homogène de la substance dans le ferrite. Généralement, la température d'imprégnation est de 1000 à 1275°C.

La durée d'imprégnation $D_i$, c'est-à-dire de maintien du ferrite à la température d'imprégnation, permet d'assurer la diffusion voulue de la substance. Elle peut aller de 10min à 15h, mais on utilise généralement des durées $D_i$ de 15min à 2h.

La vitesse de refroidissement, après imprégnation, peut également avoir une influence sur les résultats lorsque la quantité de mélange utilisée est inférieure à 1%. En revanche, lorsque la quantité de mélange utilisée est supérieure à 1% en poids, la vitesse de refroidissement n'a que peu d'influence. Généralement, on utilise des vitesses de refroidissement de 100 à 500°C/h, et on évite les refroidissements plus rapides qui risquent d'entraîner une modification des propriétés magnétiques, c'est-à-dire des valeurs de $\mu'_r$ et $\mu''_r$.

Après imprégnation et refroidissement à la température ambiante, on peut réaliser si nécessaire un traitement d'homogénéisation pour éliminer les défauts éventuels, par exemple chauffer le ferrite comportant la couche d'arrêt intergranulaire à une température de 700 à 1100°C sous air, pendant 0,5 à 15h.

Selon l'invention, le ferrite conducteur de départ peut être préparé par un procédé classique tel que ceux généralement utilisés pour la fabrication des ferrites en partant d'un mélange de poudres de ZnO, NiO et $Fe_2O_3$,

par pastillage et frittage.

Parmi ces procédés, on peut utiliser en particulier un premier procédé qui consiste à pastiller le mélange de poudres en présence d'alcool polyvinylique, sous une pression maximale de 100MPa, puis à chauffer les échantillons pendant 1h à 300°C, puis pendant 15h à 1000°C sous air, et à les fritter sous air à une température de 1300 à 1400°C pendant une durée allant de 30min à 4h.

On peut aussi utiliser un second procédé qui consiste à porter tout d'abord le mélange de poudres à une température de 1000°C pendant 15h sous air, à le refroidir à la température ambiante, à le broyer, puis à le pastiller en présence d'alcool polyvinylique sous une pression maximale de 100MPa. Après pastillage, les échantillons sont chauffés pendant 2h à 300°C, puis frittés sous air à une température de 1300 à 1400°C pendant une durée allant de 30min à 4h, comme précédemment.

Dans cés deux procédés, on peut ensuite refroidir les ferrites à la température ambiante, à une vitesse de 200°C par heure.

Les ferrites ainsi obtenus présentent une microstructure homogène et une compacité toujours supérieure à 95% et atteignant 98% dans la majorité des cas. Les grains ont une taille qui varie de 5 à 30 $\mu$m selon les conditions de frittage.

Ces ferrites ont à la température ambiante une résistivité allant de 10 à 100$\Omega$.m et des valeurs de constantes diélectriques très élevées à une fréquence de 1kHz.

D'autres caractéristiques et avantages de l'invention apparaitront mieux à la lecture des exemples suivants, donnés bien entendu à titre illustratif et non limitatif.

### Exemple 1 : Préparation d'un ferrite conducteur de formule $Ni_{0,5}Zn_{0,5}Fe_2O_4$.

On mélange des poudres de ZnO, NiO et $Fe_2O_3$ en quantités adéquates dans un microbroyeur. Après broyage pendant 3h, on pastille la poudre en présence d'alcool polyvinylique sous une pression de 100MPa pour former des pastilles cylindriques de 13mm de diamètre et de 2mm d'épaisseur.

On chauffe ensuite les pastilles pendant 1h à 300°C, puis pendant 15h à 1000°C à l'air, et on les fritte sous air à 1400°C, pendant 1h.

On obtient ainsi un ferrite ayant une résistivité de 45±15$\Omega$.m à 1kHz.

On porte ensuite ce ferrite à 1100°C pendant 0,50h à l'air et on détermine la valeur des constantes diélectriques réelle $\varepsilon'_r$ et imaginaire $\varepsilon''_r$ ainsi que des perméabilités réelle $\mu'_r$ et imaginaire $\mu''_r$ à des fréquences de 1kHz, 500MHz et 1GHz.

Les résultats obtenus sont donnés dans le tableau annexé.

Au vu de ces résultats, on constate que les constantes diélectriques réelle et imaginaire sont très élevées à 1kHz et qu'elles diminuent très fortement ensuite avec la fréquence.

### Exemple 2 : Préparation d'un ferrite $Ni_{0,55}Zn_{0,50}Fe_2O_4$ dont les grains sont isolés par une substance constituée de $0,45Bi_2O_3$, $0,45 Li_2O$ et $0,10 Fe_2O_3$.

On prépare comme dans l'exemple 1 un ferrite de formule $Ni_{0,5}Zn_{0,5}Fe_2O_4$, en réalisant le frittage à 1400°C pendant 1h.

On forme ensuite une couche d'arrêt inter-granulaire à partir d'un mélange ternaire initial de 0,45 $Bi_2O_3$, 0,45 $Li_2CO_3$ et 0,10 $Fe_2O_3$.

Tout d'abord, on met en suspension ce mélange ternaire dans de l'alcool polyvinylique pour avoir une fraction massique en mélange ternaire de 0,85. On applique la suspension sur le ferrite obtenu précédemment, puis on la sèche pendant 2h à 150°C, puis pendant 1h à 300°C. On obtient ainsi 2% en poids de mélange ternaire par rapport au poids de ferrite. On porte ensuite l'ensemble à la température d'imprégnation $T_i$ qui est de 1100°C, et on le maintient à cette température pendant une durée $D_i$ de 30min.

On détermine ensuite comme dans l'exemple 1, les constantes diélectriques réelle $\varepsilon'_r$ et imaginaire $\varepsilon''_r$ ainsi que les perméabilités réelle et imaginaire $\mu'_r$ et $\mu''_r$ du matériau à 1kHz, 500MHz et 1GHz. Les résultats obtenus sont donnés dans le tableau annexé.

### Exemple 3 : Préparation d'un ferrite $Ni_{0,5}Zn_{0,5}Fe_2O_4$ comportant une couche d'arrêt intergranulaire en 0,45 $Bi_2O_3$, 0,45 $Li_2O$ et $0,10K_2O$.

On prépare comme dans l'exemple 2 un ferrite en utilisant une température de frittage de 1400°C et une durée de frittage de 1h.

On soumet ensuite le ferrite ainsi obtenu à un traitement d'imprégnation en utilisant comme mélange ternaire initial, le mélange : $0,45Bi_2O_3$, $0,45Li_2CO_3$, et $0,10K_2CO_3$.

On suit le même mode opératoire que dans l'exemple 2, sauf que la quantité de mélange ternaire utilisé correspond à 7,9% en poids du ferrite, que la température d'imprégnation est de 1250°C et la durée d'imprégnation est de 15min.

Les résultats obtenus dans ces conditions sont donnés dans le tableau annexé.

**Exemple 4 : Préparation d'un ferrite $Ni_{0,5}Zn_{0,5}Fe_2O_4$ comportant une couche d'arrêt constituée de $0,45Bi_2O_3$, $0,45Li_2O$ et $0,10Fe_2O_3$.**

Dans cet exemple, on prépare le ferrite en suivant le même mode opératoire que dans l'exemple 1. On réalise ensuite l'imprégnation en suivant le même mode opératoire que dans l'exemple 2, mais en utilisant les conditions suivantes :
- mélange ternaire initial : $0,45Bi_2O_3$, $0,45Li_2CO_3$ et $0,10Fe_2O_3$,
- quantité de mélange ternaire : 5,4% en poids du ferrite,
- température d'imprégnation : 1100°C,
- durée d'imprégnation : 30min.

Après ce traitement d'imprégnation, on effectue un traitement thermique de réoxydation pendant 1h à 800°C, sous air. Les résultats obtenus sont donnés dans le tableau annexé.

**Exemple 5 : Préparation d'un ferrite $Ni_{0,5}Zn_{0,5}Fe_2O_4$ comportant une couche d'arrêt intergranulaire à base de $0,45Bi_2O_3$, $0,45Li_2O$ et $0,10PbO$.**

On prépare le ferrite de la même façon que dans l'exemple 1.

On réalise ensuite l'imprégnation en suivant le même mode opératoire que dans l'exemple 2, mais en utilisant les conditions suivantes :
- mélange ternaire initial : $0,45Bi_2O_3$, $0,45Li_2CO_3$ et $0,10PbO$,
- quantité de mélange ternaire : 7,5% en poids,
- température d'imprégnation : 1250°C,
- durée d'imprégnation : 15min.

Les résultats obtenus dans ces conditions sont donnés dans le tableau annexé.

**Exemple 6 : Préparation d'un ferrite $Ni_{0,5}Zn_{0,5}Fe_2O_4$ comportant une couche d'arrêt intergranulaire à base de $0,40Bi_2O_3$, $0,40Li_2O$ et $0,20B_2O_3$.**

On prépare le ferrite comme dans l'exemple 1. On réalise ensuite l'imprégnation comme dans l'exemple 2, mais en utilisant les conditions suivantes :
- mélange ternaire initial : $0,40Bi_2O_3$, $0,40Li_2CO_3$ et $0,20B_2O_3$,
- quantité de mélange ternaire : 10,9% en poids du ferrite,
- température d'imprégnation : 1250°C,
- durée d'imprégnation : 15min.

Les résultats obtenus sont donnés dans le tableau annexé.

**T A B L E A U**

| Ex | Mélange ternaire $a$ $Bi_2O_3$ | $b$ $Li_2O$ | $c$ $Z'$ | $Z'$ | Quantité de mélange ternaire (%poids) | $T_{impr.}$ (°C) | $D_{impr}$ (min) | 1kHz $\varepsilon'_r$ | $\varepsilon''_r$ | $\rho$ $\Omega_{cm}$ | 500MHz $\varepsilon'_r$ | $\varepsilon''_r$ | $\mu'_r$ | $\mu''_r$ | 1GHz $\varepsilon'_r$ | $\varepsilon''_r$ | $\mu'_r$ | $\mu''_r$ |
|---|---|---|---|---|---|---|---|---|---|---|---|---|---|---|---|---|---|---|
| | Conditions d'imprégnation | | | | | | | Caractéristiques magnétodiélectriques | | | | | | | | | | |
| 1 | (ferrite seul) | | | | | 1100 | 30 | $182.10^3$ | $233.10^3$ | $4.10^3$ | 23 | 13 | 8 | 23 | 20 | 11 | 5 | 12 |
| 2 | 0,45 | 0,45 | 0,10 | $Fe_2O_3$ | 2,0 | 1100 | 30 | 32 | 6 | $30.10^7$ | 19 | 1 | 8 | 24 | 18 | 0,7 | 4 | 12 |
| 3 | 0,45 | 0,45 | 0,10 | $K_2O$ | 7,9 | 1250 | 15 | 210 | 45 | $4.10^7$ | 19,5 | 0,7 | 10 | 22 | 19 | 0,5 | 4 | 13 |
| 4* | 0,45 | 0,45 | 0,10 | $Fe_2O_3$ | 5,6 | 1100 | 30 | 21 | 5 | $38.10^7$ | 18 | 0,6 | 9 | 22 | 18 | 0,4 | 4 | 11 |
| 5 | 0,45 | 0,45 | 0,10 | $PbO$ | 7,5 | 1250 | 15 | 97 | 21 | $8.10^7$ | 19 | 0,6 | 8 | 23 | 19 | 0,4 | 4 | 11 |
| 6 | 0,40 | 0,40 | 0,20 | $B_2O_3$ | 10,9 | 1250 | 15 | 240 | 42 | $4.10^7$ | 19 | 0,5 | 9 | 21 | 18 | 0,4 | 4 | 11 |

\* Traitement thermique complémentaire à 800°C
sous air pendant 1h.

EP 0 394 107 B1

**Revendications**

1. Composition céramique diélectrique comportant des grains semiconducteurs de ferrite, isolés par une substance formant couche d'arrêt intergranulaire constituée de $Bi_2O_3$ et d'au moins un oxyde choisi parmi PbO, $Li_2O$, $SiO_2$, $B_2O_3$, $Fe_2O_3$, $Na_2O$ et $K_2O$.

2. Composition selon la revendication 1, caractérisée en ce que la couche d'arrêt intergranulaire est constituée de $Bi_2O_3$, $Li_2O$ et d'au moins un oxyde choisi parmi PbO, $SiO_2$, $B_2O_3$, $Fe_2O_3$, $Na_2O$ et $K_2O$.

3. Composition selon l'une quelconque des revendications 1 et 2, caractérisée en ce que le ferrite répond à la formule $Ni_xZn_{1-x}Fe_2O_4$ dans laquelle x est tel que $0{,}40 \leqq x \leqq 0{,}60$.

4. Composition selon la revendication 3, caractérisée en ce que le ferrite répond à la formule $Ni_{0,5}Zn_{0,5}Fe_2O_4$.

5. Composition selon l'une quelconque des revendications 1 à 4, caractérisée en ce que la substance formant couche d'arrêt est formée d'un mélange de a $Bi_2O_3$, b $Li_2O$ et c Z avec Z représentant PbO, $SiO_2$, $B_2O_3$, $Fe_2O_3$, $Na_2O$ ou $K_2O$, et a, b et c représentant les fractions molaires des constituants du mélange et étant tels que
   - a+b>0,50, et
   - a+b+c=1.

6. Composition selon la revendication 5, caractérisée en ce que Z est $Fe_2O_3$.

7. Composition selon l'une quelconque des revendications 5 et 6, caractérisée en ce que a=b=0,45 et c=0,10.

8. Composition selon l'une quelconque des revendications 1 à 6, caractérisée en ce que la substance formant couche d'arrêt représente de 0,45 à 15% en poids du ferrite.

9. Procédé de préparation d'une composition céramique diélectrique selon l'une quelconque des revendications 1 à 6, caractérisée en ce qu'il consiste à préparer par frittage un ferrite semiconducteur, et à imprégner le ferrite ainsi obtenu par un mélange fondu comprenant $Bi_2O_3$ et au moins un autre constituant choisi parmi $Li_2O$, PbO, $SiO_2$, $B_2O_3$, $Fe_2O_3$, $Na_2O$ et $K_2O$.

10. Procédé selon la revendication 9, caractérisé en ce que le mélange fondu est un mélange ternaire comprenant a $Bi_2O_3$, b $Li_2O$ et c Z' avec Z' représentant PbO, $SiO_2$, $B_2O_3$, $Fe_2O_3$, $Na_2O$ ou $K_2O$ et a, b et c représentant les fractions molaires des constituants du mélange ternaire et étant tels que
    - a+b>0,50, et
    - a+b+c=1.

11. Procédé selon l'une quelconque des revendications 9 et 10, caractérisé en ce que l'on réalise l'imprégnation en effectuant les étapes suivantes :
    1°) préparation d'une suspension du mélange de $Bi_2O_3$, et du ou des autres constituants et/ou de précurseurs de ce ou ces autres constituants dans un liquide volatil,
    2°) dépôt du mélange sur le ferrite par application de la suspension suivie d'un séchage pour évaporer le solvant,
    3°) chauffage du ferrite revêtu du mélange à une température d'imprégnation $T_i$ telle que le mélange se trouve à l'état fondu, et
    4°) maintien du ferrite à cette température d'imprégnation pendant une durée $D_i$ suffisante pour former la couche d'arrêt intergranulaire.

12. Procédé selon la revendication 11, caractérisé en ce que la température d'imprégnation est de 1000 à 1275°C.

13. Procédé selon l'une quelconque des revendications 11 et 12, caractérisé en ce que la durée d'imprégnation varie de 10min à 15h.

14. Procédé selon l'une quelconque des revendications 9 à 13, caractérisé en ce que la quantité de mélange utilisée représente 0,45 à 15% en poids du ferrite.

**15.** Procédé selon l'une quelconque des revendications 9 à 14, caractérisé en ce que l'on prépare le ferrite à partir d'un mélange de poudres de ZnO, NiO et $Fe_2O_3$ par pastillage et frittage.

**Patentansprüche**

**1.** Dielektrische keramische Zusammensetzung, bestehend aus halbleitenden Ferritkörnern, die von einer eine intergranulare Sperrschicht bildenden Substanz isoliert werden, die aus $Bi_2O_3$ und mindestens einem der Oxide PbO, $Li_2O$, $SiO_2$, $B_2O_3$, $Fe_2O_3$, $Na_2O$ oder $K_2O$ besteht.

**2.** Zusammensetzung nach Anspruch 1,
dadurch gekennzeichnet, daß die intergranulare Sperrschicht aus $Bi_2O_3$, $Li_2O$ und mindestens einem der Oxide PbO, $SiO_2$, $B_2O_3$, $Fe_2O_3$, $Na_2O$ oder $K_2O$ besteht.

**3.** Zusammensetzung nach einem der Ansprüche 1 oder 2,
dadurch gekennzeichnet, daß das Ferrit der Formel $N_{ix}Zn_{1-x}\,Fe_2O_4$ entspricht, wobei für x gilt: $0{,}40 \leqq x \leqq 0{,}60$.

**4.** Zusammensetzung nach Anspruch 3,
dadurch gekennzeichnet, daß das Ferrit der Formel $Ni_{0,5}\,Zn_{0,5}\,Fe_2O_4$ entspricht.

**5.** Zusammensetzung nach einem der Ansprüche 1 bis 4,
dadurch gekennzeichnet, daß die eine intergranulare Sperrschicht bildende Substanz aus einer Mischung von a $Bi_2O_3$, b $Li_2O$ und c Z besteht, wobei Z für PbO, $SiO_2$, $B_2O_3$, $Fe_2O_3$, $Na_2O$ oder $K_2O$ steht, und wobei a, b und c für die Molenbrüche der Mischungskomponenten stehen und für sie gilt:
- a + b > 0,50, und
- a + b + c = 1.

**6.** Zusammensetzung nach Anspruch 5,
dadurch gekennzeichnet, daß Z für $Fe_2O_3$ steht.

**7.** Zusammensetzung nach einem der Ansprüche 5 und 6,
dadurch gekennzeichnet, daß a = b = 0,45 und c = 0,10.

**8.** Zusammensetzung nach einem der Ansprüche 1 bis 6,
dadurch gekennzeichnet, daß die Sperrschicht bildende Substanz 0,45 bis 15% des Gewichts des Ferrit darstellt.

**9.** Herstellungsverfahren für eine dielektrische keramische Zusammensetzung nach einem der Ansprüche 1 bis 6,
dadurch gekennzeichnet, daß es darin besteht, einen Ferrithalbleiter durch Sintern herzustellen und das auf diese Weise erhaltene Ferrit mit einer geschmolzenen Mischung zu tränken, die aus $Bi_2O_3$ und mindestens einer anderen Komponente, sei es PbO, $Li_2O$, $SiO_2$, $B_2O_3$, $Fe_2O_3$, $Na_2O$ oder $K_2O$, besteht.

**10.** Verfahren nach Anspruch 9,
dadurch gekennzeichnet, daß die geschmolzene Mischung eine ternäre Mischung ist, die aus a $Bi_2O_3$, b $Li_2O$ und c Z' besteht, wobei Z' für PbO, $SiO_2$, $B_2O_3$, $Fe_2O_3$, $Na_2O$ oder $K_2O$ steht, und wobei a, b und c für die Molenbrüche der Komponenten der ternären Mischung stehen und für sie gilt:
- a + b > 0,50, und
- a + b + c = 1.

**11.** Verfahren nach einem der Ansprüche 9 und 10, dadurch gekennzeichnet, daß das Tränken erfolgt, indem folgende Schritte ausgeführt werden:
- 1. Bereitung eines Schlickers der $Bi_2O_3$-Mischung und der anderen Komponente oder Komponenten und/oder Zwischenstoffen dieser anderen Komponente oder Komponenten in einer leicht flüchtigen Flüssigkeit,
- 2. Ablagerung der Mischung auf dem Ferrit durch Aufbringen des Schlickers mit nachfolgendem Trocknen zum Verdampfen des Losungsmittels,
- 3. Erhitzen des mit der Mischung überzogenen Ferrit auf eine solche Imprägniertemperatur $T_i$, daß

EP 0 394 107 B1

die Mischung sich in geschmolzenem Zustand befindet, und
- 4. Halten dieser Imprägniertemperatur des Ferrit für eine Dauer D$_i$, die ausreicht, damit sich die intergranulare Sperrschicht bildet.

12. Verfahren nach Anspruch 11,
dadurch gekennzeichnet, daß die Imprägniertemperatur zwischen 1000 und 1275°C liegt.

13. Verfahren nach einem der Ansprüche 11 und 12,
dadurch gekennzeichnet, daß die Imprägnierdauer zwischen 10 min und 15 Std. liegt.

14. Verfahren nach einem der Ansprüche 9 bis 13,
dadurch gekennzeichnet, daß die verwendete Mischungsmenge 0,45 bis 15% des Gewichts des Ferrit darstellt.

15. Verfahren nach einem der Ansprüche 9 bis 14,
dadurch gekennzeichnet, daß das Ferrit aus einer Pulvermischung von ZnO, NiO und Fe$_2$O$_3$ durch Pelletisieren und Sintern bereitet wird.

## Claims

1. Dielectric ceramic composition which includes semiconducting ferrite grains insulated by a substance forming an intergranular stop layer consisting of Bi$_2$O$_3$ and of at least one oxide chosen from PbO, Li$_2$O, SiO$_2$, B$_2$O$_3$, Fe$_2$O$_3$, Na$_2$O and K$_2$O.

2. Composition according to Claim 1, characterized in that the intergranular stop layer consists of Bi$_2$O$_3$, Li$_2$O and of at least one oxide chosen from PbO, SiO$_2$, B$_2$O$_3$, Fe$_2$O$_3$, Na$_2$O and K$_2$O.

3. Composition according to either of Claims 1 and 2, characterized in that the ferrite corresponds to the formula Ni$_x$Zn$_{1-x}$Fe$_2$O$_4$ in which x is such that $0.40 \leq x \leq 0.60$.

4. Composition according to Claim 3, characterized in that the ferrite corresponds to the formula Ni$_{0.5}$Zn$_{0.5}$Fe$_2$O$_4$.

5. Composition according to any one of Claims 1 to 4, characterized in that the substance forming the stop layer is formed by a mixture of a Bi$_2$O$_3$, b Li$_2$O and c Z, with Z representing PbO, SiO$_2$, B$_2$O$_3$, Fe$_2$O$_3$, Na$_2$O or K$_2$O, and a, b and c representing the molar fractions of the constituents of the mixture and being such that
- a+b>0.50 and
- a+b+c=1.

6. Composition according to Claim 5, characterized in that Z is Fe$_2$O$_3$.

7. Composition according to either of Claims 5 and 6, characterized in that a=b=0.45 and c=0.10.

8. Composition according to any one of Claims 1 to 6, characterized in that the substance forming the stop layer represents 0.45 to 15% by weight of the ferrite.

9. Method of making a dielectric ceramic composition according to any one of Claims 1 to 6, characterized in that it consists in making, by sintering, a semi-conducting ferrite and in impregnating the ferrite thus obtained with a molten mixture comprising Bi$_2$O$_3$ and at least one other constituent chosen from Li$_2$O, PbO, SiO$_2$, B$_2$O$_3$, Fe$_2$O$_3$, Na$_2$O and K$_2$O.

10. Method according to Claim 9, characterized in that the molten mixture is a ternary mixture comprising a Bi$_2$O$_3$, b Li$_2$O$_3$ and c Z', with Z' representing PbO, SiO$_2$, B$_2$O$_3$, Fe$_2$O$_3$, Na$_2$O or K$_2$O and a, b and c representing the molar fractions of the constituents of the ternary mixture and being such that
- a+b>0.50 and
- a+b+c=1.

11. Method according to either of Claims 9 and 10, characterized in that the impregnation is performed by carrying out the following steps:

1.) making a suspension of the mixture of $Bi_2O_3$ and of the other constituent or constituents and/or of precursors of this or these other constituents in a volatile liquid;

2.) depositing the mixture on the ferrite by applying the suspension, followed by drying in order to evaporate the solvent;

3.) heating the ferrite coated with the mixture to an impregnation temperature $T_i$ such that the mixture is in molten state and

4.) holding the ferrite at this impregnation temperature for a time $D_i$ sufficient to form the intergranular stop layer.

12. Method according to Claim 11, characterized in that the impregnation temperature is 1000 to 1275°C.

13. Method according to either of Claims 11 and 12, characterized in that the impregnation time varies from 10 min to 15 h.

14. Method according to any one of Claims 9 to 13, characterized in that the quantity of mixture used represents 0.45 to 15% by weight of the ferrite.

15. Method according to any one of Claims 9 to 14, characterized in that the ferrite is made from a mixture of ZnO, NiO and $Fe_2O_3$ powders by pelletizing and sintering.